(19) Europäisches Patentamt
European Patent Office
Office européen des brevets

(11) Veröffentlichungsnummer: **0 462 475 A2**

(12) **EUROPÄISCHE PATENTANMELDUNG**

(21) Anmeldenummer: **91109414.2**

(22) Anmeldetag: **08.06.91**

(51) Int. Cl.5: **C08L 69/00**, C08L 67/03, C08L 51/04, C08L 81/04

(30) Priorität: **21.06.90 DE 4019802**

(43) Veröffentlichungstag der Anmeldung: **27.12.91 Patentblatt 91/52**

(84) Benannte Vertragsstaaten: **DE FR GB IT NL**

(71) Anmelder: **BAYER AG**
**W-5090 Leverkusen 1 Bayerwerk(DE)**

(72) Erfinder: **Wittmann, Dieter, Dr.**
**Wolfskaul 4**
**W-5000 Köln 80(DE)**
Erfinder: **Eckel, Thomas, Dr.**
**Gneisenaustrasse 15a**
**W-4047 Dormagen(DE)**
Erfinder: **Ott, Karl-Heinz, Dr.**
**Paul-Klee-Strasse 54**
**W-5090 Leverkusen(DE)**
Erfinder: **Kress, Hans-Jürgen, Dr**
**Scheiblerstrasse 111**
**W-4150 Krefeld(DE)**
Erfinder: **Schoeps, Jochen, Dr.**
**Windmühlenstrasse 126**
**W-4150 Krefeld(DE)**
Erfinder: **Plaetschke, Rüdiger**
**Am Thelenhof 18**
**W-5090 Leverkusen(DE)**

(54) **Thermostabile Formmassen aus aromatischen Polycarbonaten, Polyestern oder Polyestercarbonaten, Pfropfpolymerisaten und Polyarylensulfiden.**

(57) Gegenstand der vorliegenden Erfindung sind Formmassen enthaltend Polycarbonate, Pfropfpolymerisate, Polyarylensulfide, und gegebenenfalls Vinylcopolymerisate oder Polyalkylenterephthalate, sowie gegebenenfalls übliche Zusätze, und ein Verfahren zur Herstellung der erfindungsgemäßen Formmassen.

EP 0 462 475 A2

Mischungen aus Polycarbonaten und Polyarylensulfiden sind bekannt.

So beschreibt z.B. DE 2 503 336 flammwidrige Mischungen mit guten mechanischen Eigenschaften aus Polycarbonaten und Polyphenylensulfiden, die sich zudem durch verminderte Hydrolyseanfälligkeit auszeichnen.

In der DE 3 205 992 wird die spezielle Aufarbeitung von Polyphenylensulfiden hervorgehoben, wodurch in Abmischung mit Polycarbonaten, Polyestern und Polyestercarbonaten es zu einem verminderten Molekulargewichtsabbau dieser Komponenten kommt. Nachteilig ist, daß häufig selbst durch geringe Mengen an Polyarylensulfiden in einer Formmasse das sehr ungünstige Kerbschlagzähigkeitsniveau dieser Polymerklasse auf die gesamte Formmasse übertragen wird.

Die EP 0 285 945 beschreibt Pulverkompositionen aus Polyarylensulfiden und thermoplastischen Vinylpolymerisaten und ihre Verwendung in thermoplastischen Formmassen. Zum Erreichen guter Oberflächenqualitäten der Formkörper ist es nach EP 0 285 945 (S. 6, Zeilen 49 bis 56) unbedingt erforderlich, das Polyarylensulfid mit dem Vinylpolymerisat in Form einer Dispersion zu mischen und gemeinsam aufzuarbeiten.

Aus der DE-OS 2 903 100 sind flammwidrige Mischungen bekannt, deren harzartige Bestandteile unter anderem auch aus Mischungen aus Polyarylencarbonat, Acrylnitril-Butadien-Styrol-Copolymer und Polyphenylensulfid bestehen können. Unter dem Acrylnitril-Butadien-Styrol-Copolymer sind auch Pfropfcopolymere subsummiert. Mengenverhältnisse dieser drei Komponenten sind in der DE-OS 2 903 100 nicht angegeben.

Es hat sich nun gezeigt, daß durch den Zusatz von bis zu 40 Gew.-Teilen, vorzugsweise von bis zu 20 Gew.-Teilen und insbesondere von bis zu 10 Gew.-Teilen an Polyarylensulfid zu Formmassen auf Basis von Polycarbonaten und/oder Polyestercarbonaten und/oder Polyestern und Pfropfpolymerisaten Formmassen mit guter Thermostabilität, verbessertem Rohton und guter Zähigkeit erhalten werden.

Gegenstand der vorliegenden Erfindung sind demzufolge Formmassen, enthaltend:

A. 10 bis 95 Gew.-Teile eines aromatischen Polycarbonats und/oder eines aromatischen Polyestercarbonats und/oder eines aromatischen Polyesters

B. 5 bis 70 Gew.-Teile eines Pfropfpolymerisats von

B.1 5 bis 95 Gew.-Teilen einer Pfropfauflage aus Vinylmonomerpolymerisat, wobei die Pfropfauflage erhalten wurde durch Pfropfpolymerisation einer Monomermischung aus

B.1.1 50 bis 99 Gew.-Teilen Styrol, α-Methylstyrol, kernsubstituiertem Styrol, Methylmethacrylat oder Mischungen daraus, und

B.1.2 1 bis 50 Gew.-Teilen (Meth-)Acrylnitril, Methylmethacrylat, n-Butylacrylat, t-Butyl(meth)acrylat, Maleinsäureanhydrid, N-Alkyl- oder N-Aryl-substituiertem Maleinimid oder Mischungen daraus,

auf

B.2 5 bis 95 Gew.-Teile einer vernetzten, teilchenförmigen elastomeren Pfropfgrundlage mit einem durchschnittlichen Teilchendurchmesser ($d_{50}$-Wert) von 0,05 bis 5 µm, vorzugsweise 0,1 bis 0,6 µm und einer Glasübergangstemperatur < 10 °C

C. 0 bis 50 Gew.-Teile eines thermoplastischen Harzes, das

C.1 ein Vinylcopolymerisat, vorzugsweise aus

C.1.1 50 bis 99 Gew.-Teilen Styrol, α-Methylstyrol, kernsubstituiertem Styrol, Methylmethacrylat oder Mischungen daraus, und

C.1.2 1 bis 50 Gew.-Teilen (Meth-)Acrylnitril, Methylmethacrylat, n-Butylacrylat, t-Butyl(meth)acrylat, Maleinsäureanhydrid, N-Alkyl- oder N-Aryl-substituiertem Maleinimid oder Mischungen daraus, oder das

C.2 ein Polyalkylenterephthalat ist,

dadurch gekennzeichnet, daß die Formmassen, bezogen auf 100 Gew.-Teile aus A und B und gegebenenfalls C

D 0,1 bis 40, vorzugsweise 0,5 bis 20, besonders bevorzugt 1 bis 10 Gew.-Teile eines Polyarylensulfids enthalten.

Komponente A

Aromatische Polycarbonate und/oder aromatische Polyestercarbonate und/oder aromatische Polyester gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964, sowie die DE-AS 1 495 626, DE-OS 2 232 877, DE-OS 2 703 376, DE-OS 3 000 610, DE-OS 2 714 544; zur Herstellung aromatischer Polyester z.B. DE-OS 2 940 024, zur Herstellung aromatischer Polyestercarbonate z.B. DE-OS 3 007 934).

Die Herstellung aromatischer Polycarbonate und/oder aromatischer Polyestercarbonate und/oder aromatischer Polyester erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen, und gegebenenfalls unter Mitverwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate und/oder aromatischen Polyester sind vorzugsweise solche der Formel (I)

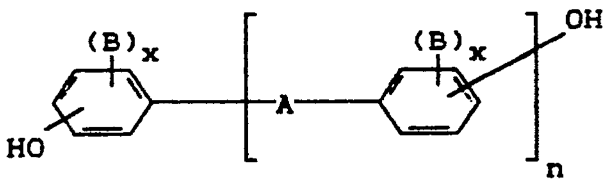

(I)

wobei

"A" eine Einfachbindung, ein $C_1$-$C_5$-Alkylen, ein $C_2$-$C_5$-Alkyliden, ein $C_5$-$C_6$-Cycloalkyliden, -O-, -SO-,

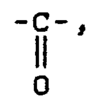

-S-,

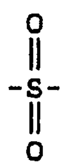

oder ein Rest der Formel (II)

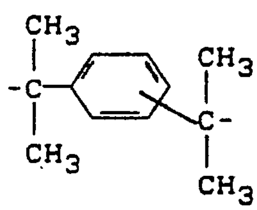

(II)

"B" Chlor, Brom

"X" 0, 1 oder 2 und

"n" 1 oder 0 sind.

Bevorzugte Diphenole sind somit Hydrochinon, Resorcin, Dihydroxydiphenyle, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxyphenyl)-sulfoxide, Bis-(hydroxyphenyl)-ketone, Bis-(hydroxyphenyl)-sulfide, Bis-(hydroxyphenyl)-sulfone und α,α-Bis-(hydroxyphenyl)-diisopropylbenzole sowie deren kernbromierte und/oder kernchlorierte Derivate.

Die wichtigen Diphenole sind Bisphenol-A, 2,4-Bis-(4-hydroxyphenyl)-2-methylbutan, 1,1-Bis-(4-hydroxyphenyl)-cyclohexan, 4,4'-Dihydroxydiphenylsulfid, 4,4'-Dihydroxydiphenylsulfon sowie deren di- und tetrabromierten oder chlorierten Derivate wie 2,2-Bis-(3-chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Besonders bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach Literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 (Le A 19 006) oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol-% und 10 Mol-%, bezogen auf die Molsumme der jeweils eingesetzten Diphenole.

Die thermoplastischen, aromatischen Polycarbonate haben mittlere Gewichtsmittelmolekulargewichte ($\overline{M}_w$, gemessen z.B. durch Ultrazentrifugation oder Streulichtmessung) von 10 000 bis 200 000, vorzugsweise von 20 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzen Diphenole, an drei- oder mehr als dreifunktionellen Verbindungen, beispielsweise solchen mit drei oder mehr als drei phenolischen Gruppen.

Geeignet sind sowohl Homopolycarbonate als auch Copolycarbonate. Zur Herstellung erfindungsgemäßer Copolycarbonate A) können auch 1 bis 25 Gew.-%, vorzugsweise 2,5 bis 25 Gew.-% (bezogen auf die Gesamtmenge an einzusetzenden Diphenolen), Diphenole der Formel (III) verwendet werden,

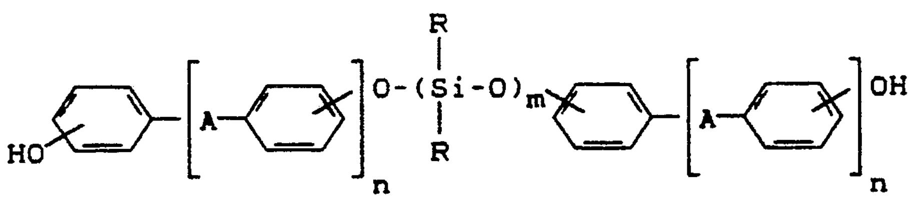

(III)

worin

-A- die für Formel (I) genannte Bedeutung hat, n 1 oder null ist, die R's gleich oder verschieden sind und ein lineares $C_1$-$C_{20}$-Alkyl, verzweigtes $C_3$-$C_{20}$-Alkyl oder $C_6$-$C_{20}$-Aryl, vorzugsweise $CH_3$, sind und m eine ganze Zahl zwischen 5 und 100, vorzugsweise zwischen 20 und 80 ist. Polydiorganosiloxane mit Hydroxyaryloxy-Endgruppen gemäß Formel (III) sind bekannt (s. beispielsweise US-Patent 3 419 634) bzw. nach literaturbekannten Verahren herstellbar. Die Herstellung Polydiorganosiloxanhaltiger Copolycarbonate wird z.B. in DE-OS 3 334 782 beschrieben.

Bevorzugte Polycarbonate sind neben den Bisphenol A-Homopolycarbonaten die Copolycarbonate von Bisphenol A mit bis zu 15 Mol-%, bezogen auf die Molsummen an Diphenolen, an den anderen der wichtigsten Diphenole, insbesonder an 2,2-Bis-(3,5-dibrom-4-hydroxyphenyl)-propan.

Aromatische Dicarbonsäuredihylogenide zur Herstellung der thermoplastischen, aromatischen Polyester und thermoplastischen, aromatischen Polyestercarbonate sind vorzugsweise die Disäuredichloride der Isopthalsäure, Terepthalsäure, Diphenylether-4,4'-dicarbonsäure und der Naphthalin-2,6-dicarbonsäure.

Besonders bevorzugt sind Gemische der Disäuredichloride der Isopthalsäure und der Terepthalsäure im Verhältnis zwischen 1 : 20 und 20 : 1.

Für die Herstellung der aromatischen Polyester werden die Dicarbonsäuredihalogenide als einzige bifunktionelle Säurederivate verwendet; bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyester und Polyestercarbonate kommen außer den bereits genannten Monophenolen noch deren Chlorkohlensäureester sowie die Säurechloride von aromatischen Monocarbonsäuren, die gegebenenfalls durch $C_1$-$C_{22}$-Alkylgruppen oder durch Halogenatome substituiert sein können, sowie aliphatische $C_2$-$C_{22}$-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und Falle von Monocarbonsäurechlorid-Kettenabbrechern auf Mole Dicarbonsäuredichloride.

Die aromatischen Polyester und Polyestercarbonate können auch aromatische Hydroxycarbonsäuren eingebaut enthalten.

Die aromatischen Polyester und aromatischen Polyestercarbonate können sowohl linear als auch in bekannter Weise verzweigt sein. (S. dazu ebenfalls DE-OS 2 940 024 und DE-OS 3 007 934.)

Als Verzweigungsmittel können beispielsweise 3- oder mehrfunktionelle Carbonsäurechloride, wie Trimesinsäuretrichlorid, Cyanursäuretrichlorid, 3.3', 4,4'-Benzophenon-tetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phoroglucin, 4,6-Dimethyl-2,4,6-tri-(4-hydroxyphenyl)-hepten-2, 4,6-Dimethyl-2,4-6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis (2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4''-dihydroxytriphenyl)-methyl]-benzol, in Mengen von 0,01 bis 1,0 Mol% (bezogen auf eingesetzte Diphenole) verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren.

Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen.

Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polyester und aromatischen Polyestercarbonate liegt im Bereich 1,18 bis 1,4, vorzugsweise 1,22 bis 1,3 (gemessen an Lösungen von 0,5 g Polyestercarbonat in 100 ml $CH_2Cl_2$-Lösung bei 25° C).

Die thermoplastischen, aromatischen Polycarbonate und/oder Polyestercarbonate und/oder Polyester können allein oder im beliebigen Gemisch untereinander eingesetzt werden.

Komponente B

Die erfindungsgemäßen Komponenten B sind Pfropfcopolymerisate von Monomeren B.1 auf kautschukelastische Grundlagen B.2.

Beispiele für Monomere B.1 sind B.1.1 Styrol, α-Methylstyrol, p-Methylstyrol, p-Chlorstyrol, Methylmethacrylat oder Mischungen daraus, Beispiele für Monomere B.1.2 sind Acrylnitril, Methacrylnitril, Methylmethacrylat, n-Butylacrylat, t-Butylacrylat, Maleinsäureanhydrid und N-Phenyl-Maleinimid oder Mischungen daraus.

Bevorzugte Monomere B.1.1 sind Styrol, α-Methylstyrol und Methylmethacrylat, bevorzugte Monomere B.1.2 sind Acrylnitril, Maleinsäureanhydrid und Methylmethacrylat.

Besonders bevorzugte Monomere sind B.1.1 Styrol und B.1.2 Acrylnitril.

Für die kautschukmodifizierten Pfropfpolymerisate B. geeignete Kautschuke B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke.

Bevorzugte Kautschuke B.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, daß die Glasübergangstemperaturen der Komponente B.2 unterhalb 10° C, vorzugsweise unterhalb -10° C liegt. Besonders bevorzugt wird reiner Polybutadienkautschuk.

Besonders bevorzugte Polymerisate B sind z.B. ABS-Polymerisate, wie sie z.B. in der DE-OS 2 035 390 (=US-PS 3 644 574) oder in der DE-OS 2 248 242 (=GB-PS 1 409 275) beschrieben sind.

Der Gelanteil der bevorzugten Pfropfgrundlagen B.2 beträgt mindestens 60 Gew.-% (in Toluol gemessen), der mittlere Teilchendurchmesser $d_{50}$ des Pfropfpolymerisats B 0,05 bis 5 µm, vorzugsweise 0,1 bis 0,6 µm.

Die Pfropfcopolymerisate B werden durch radikalische Polymerisation, z.B. durch Emulsions-, Suspensions-, Lösungs- oder Massepolymerisation, vorzugsweise durch Emulsionspolymerisation hergestellt.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisate B auch solche Produkte verstanden, die durch Polymerisation der Pfropfmonomere in Gegenwart der Pfropfgrundlage gewonnen werden.

Geeignete Acrylatkautschuke B.2 der Polymerisate B sind vorzugsweise Polymerisate aus Acrylsäurealkylestern, gegebenenfalls mit bis zu 40 Gew.-%, bezogen auf B.2, anderen polymerisierbaren, ethylenisch ungesättigten Monomeren. Zu den bevorzugten polymerisierbaren Acrylsäureestern gehören $C_1$-$C_8$-Alkyle-

ster, beispielsweise Methyl-, Ethyl-, Butyl-, n-Octyl- und 2-Ethylhexylester; Halogenalkylester, vorzugsweise Halogen-$C_1$-$C_8$-Alkylester, wie Chlorethylacrylat, sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8-C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Trivinylcyanurat, Triacryloylhexahydro-s-triazin, Triallylbenzole.

Die Menge der vernetzenden Monomere beträgt vorzugsweise 0,05 bis 5, insbesondere 0,05 bis 2 Gew.-%, bezogen auf die Pfropfgrundlage B.2.

Bei cyclischen vernetzenden Monomeren mit mindestens 3 ethylenisch ungesättigten Gruppen ist es vorteilhaft, die Menge auf unter 1 Gew.-% der Pfropfgrundlage B.2 zu beschränken.

Bevorzugte "andere" polymerisierbare, ethylenisch ungesättigte Monomere, die neben den Acrylsäureestern gegebenenfalls zur Herstellung der Pfropfgrundlage B.2 dienen können, sind z.B. Acrylnitril, Styrol, α-Methylstyrol, Acrylamide, Vinyl-$C_1$-$C_6$-alkylether, Methylmethacrylat, Butadien. Bevorzugte Acrylatkautschuke als Pfropfgrundlage B.2 sind Emulsionspolymerisate, die einen Gelgehalt von mindestens 60 Gew.-% aufweisen.

Weitere geeignete Pfropfgrundlagen gemäß B.2 sind Silikonkautschuke mit pfropfaktiven Stellen, wie sie in den DE 37 04 657, DE 37 04 655, DE 36 31 540 und DE 36 31 539 beschrieben werden.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg-Thieme-Verlag, Stuttgart 1977).

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.

Komponente C

Das thermoplastische Harz C kann entweder ein Vinylcopolymerisat C.1 oder ein Polyalkylenterephthalat C.2 sein.

Komponente C.1

Geeignete Komponente C.1 sind (Co) Polymerisate aus mindestens einem Monomeren aus der Gruppe der Vinylaromaten, der Vinylcyanide, der (Meth)Acrylsäure sowie deren $C_1$-$C_{18}$-Alkylester und der ethylenisch ungesättigten Dicarbonsäureanhydride bzw. deren Derivate.

Die (Co)Polymerisate C.1 sind harzartig, thermoplastisch und kautschukfrei.

Bevorzugte Vinylaromaten sind Styrol, α-Methylstyrol sowie deren kernhalogenierte und kernalkylierte Derivate wie z.B. p-Methylstyrol und p-Chlorstyrol.

Bevorzugte Vinylcyanide sind Acrylnitril und Methacrylnitril, bevorzugte (Meth)Acrylsäureester sind Methylmethacrylat, N-Butylacrylat, t-Butyl(meth)acrylat.

Bevorzugte ethylenisch ungesättigte Dicarbonsäuren bzw. deren Derivate sind Maleinsäureanhydrid, N-Alkyl-maleinimid und N-Aryl-maleinimid.

Besonders bevorzugte (Co)Polymerisate C.1 umfassen Copolymerisate aus

a. 50 bis 99 Gew.-% Styrol, α-Methylstryol, Methylmethacrylat oder Mischungen daraus, und

b. 1 bis 50 Gew.-% (Meth)Acrylnitril, Methylmethacrylat, Maleinsäureanhydrid oder Mischungen daraus.

Copolymerisate gemäß Komponente C.1 entstehen häufig bei der Pfropfpolymerisation der Komponene B als Nebenprodukte, besonders dann, wenn große Mengen Monomere B.1 auf kleine Mengen Kautschuk B.2 gepfropft werden.

Die erfindungsgemäß einzusetzende Menge an C.1 bezieht diese Nebenprodukte der Pfropfpolymerisation von B nicht mit ein.

Die (Co)Polymerisate gemäß C.1 sind bekannt und lassen sich durch radikalische Polymerisation, insbesondere durch Emulsions-, Suspensions-, Lösungs- oder Massepolymerisation herstellen. Die (Co)-Polymerisate gemäß Komponente C.1 besitzen vorzugsweise Molekulargewichte $\overline{M}_w$ (Gewichtsmittel, ermittelt durch Lichstreuung oder Sedimentation) zwischen 15.000 und 200.000.

Komponente C.2

Polyalkylenterephthalate C.2 im Sinne der Erfindung sind Reaktionsprodukte von aromatischen Dicarbonsäuren (oder ihren reaktionsfähigen Derivaten, z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate C.2 lassen sich aus Terephthalsäuren (oder ihren reaktionsfähigen Derivaten) und aliphatischen und cycloaliphatischen Diolen mit 2 bis 10 C-Atomen nach bekannten Methoden herstellen (Kunststoff-Handbuch, Band VIII, S. 695 ff, Carl Hanser Verlag, München 1973).

Bevorzugte Polyalkylenterephthalate C.2 enthalten 80 bis 100, vorzugsweise 90 bis 100 Mol.-%, bezogen auf die Dicarbonsäurekomponente, Terephthalsäurereste und 80 bis 100, vorzugsweise 90 bis 100 Mol-%, bezogen auf die Diolkomponente, Ethylenglykol- und/oder Butandiol-1,4-reste. Neben Terephthalsäureresten sind 0 bis 20 Mol-% Reste anderer aromatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernstein-, Adipin-, Sebacin-, Azelain- oder Cyclohexandiessigsäure. Neben Ethylenglykol- und/oder Butandiol-1,4-Resten sind 0 bis 20 Mol-% anderer aliphatischer Diole mit 3 bis 12 C-Atomen oder cycloaliphatischer Diole mit 6 bis 12 C-Atomen enthalten, z.B. Reste von Pentandiol-1,5, Hexandiol-1,6, Cyclohexandi-methanol-1,4, 3-Methylpentandiol-1,3 und -1,6, 2-Ethylhexandiol-1,3, 2,2-Diethylpropandiol-1,3, Hexandiol-2,5, 1,4-Di($\beta$-hydroxyethoxyphenyl)-propan, 2,4-Dihydroxy-1,1,3,3-tetramethylcyclobutan, 2,2-Bis-(3-$\beta$-hydroxyethoxy-phenyl)-propan und 2,2-Bis-(4-hydroxypropoxyphenyl)-propan (DE-OS 2 407 647, 2 407 776, 2 715 932).

Die Polyalkylenterephthalate C.2 können durch Einbau relativ kleiner Mengen 3- oder 4-wertiger Alkohole oder 3- oder 4-basiger Carbonsäuren, wie sie in DE-OS 1 900 270 und US-PS 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate C.2, die allein aus Terephthalsäure (oder deren reaktionsfähigen Derivaten, z.B. deren Dialkylestern) und Ethandiol und/oder Butandiol-1,4 hergestellt worden sind sowie deren Mischungen.

Bevorzugte Polyalkylenterephthalate C.2 sind auch Copolyester, die aus mindestens zwei der obengenannten Diole hergestellt sind; besonders bevorzugte Copolyester sind Poly-(ethylen-glykol/butandiol-1,4)-terephthalate. In den Copolyestern können die verschiedenen Diolreste in Form von Blöcken oder statisch verteilt vorliegen.

Die Polyalkylenterephthalate C.2 besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Tl.) bei 25° C.

Komponente D

Polyarylensulfide D umfassen Polymere, die im wesentlichen aus Phenyleneinheiten bestehen, die über Sulfidgruppen aneinander gebunden sind, gemäß Formel (IV),

$(\text{-Ar-S-})_n$ (IV),

in der Ar ein substituierter oder unsubstituierter Phenylrest und n wenigstens 50 ist. Geeignete Ausgangsverbindungen und Herstellungsverfahren sind beispielsweise in den US-Patentschriften 3 354 129 und 3 919 177 beschrieben.

Die Polyarylensulfide können in linearer, verzweigter oder vernetzter Form vorliegen.

Üblicherweise werden polyhalogenierte aromatische Verbindungen mit schwefelhaltigen Verbindungen in polaren organischen Lösungsmitteln, gegebenenfalls in Gegenwart von Katalysatoren, umgesetzt.

Geeignete polyhalogenierte aromatische Verbindungen zur Synthese der Polyarylensulfide sind beispielsweise 1,2-Dichlorbenzol, 1,3-Dichlorbenzol, 1,4-Dichlorbenzol, 2,5-Dichlortoluol, 1,4-Dibrombenzol, 2,5-Dibromanilin und andere sowie deren Mischungen. Sollen verzweigte Poylarylensulfide hergestellt werden, müssen mindestens 0,05 Mol-% der polyhalogenierten aromatischen Verbindungen Tri- oder Tetrahalogenaromaten, wie beispielsweise 1,2,4-Trichlorbenzol, 1,3,5-Trichlorbenzol oder 1,2,4,5-Tetrachlorbenzol sein.

Geeignete schwefelhaltige Verbindungen zur Synthese der Polyarylensulfide sind Alkalisulfide wie beispielsweise Natrium- oder Kaliumsulfid. Vorzugsweise werden auch die Hydrate dieser Alkalisulfide eingesetzt. Die Alkalisulfide können auch aus Hydrogensulfiden mit Hilfe von Alkalihydroxiden wie Lithiumhydroxid, Natriumhydroxid oder Kaliumhydroxid erzeugt werden.

Als polare Lösungsmittel sind beispielsweise N-Methylpyrrolidon, N-Ethylpyrrolidon, N-Methylcaprolactam, N-Ethylcaprolactam oder 1,3-Dimethylimidazolidinon geeignet.

Als Katalysatoren können Substanzen wie beispielsweise Alkalifluoride, Alkaliphosphate oder Alkalicarboxylate in Mengen von 0,02 bis 1,0 Mol pro Mol Alkalisulfid eingesetzt werden.

Bevorzugte Polyarylensulfide sind überwiegend aus p-Phenylensulfid-Einheiten aufgebaut.

Die erfindungsgemäßen Formmassen können darüber hinaus weitere übliche Zusätze wie Stabilisatoren, Pigmente, Entformungsmittel, Fließhilfsmittel, Füll- und Verstärkungsstoffe, Flammschutzmittel und Antistatika in den üblichen Mengen enthalten.

Gegenstand der vorliegenden Erfindung sind somit auch thermoplastische Formmassen enthaltend die erfindungsgemäßen Komponenten A), B), D) und gegebenenfalls C) sowie mindestens einen Zusatz ausgewählt aus Stabilisatoren, Pigmenten, Entformungsmitteln, Fließhilfsmitteln, Füllstoffen, Verstärkungsstoffen, Flammschutzmitteln und Antistatika in den üblichen Mengen.

Die erfindungsgemäßen Formmassen können hergestellt werden, indem man die Bestandteile in bekannter Weise vermischt und bei erhöhten Temperaturen, vorzugsweise bei 200 bis 350 °C, in üblichen Vorrichtungen wie Innenknetern, Extrudern oder Doppelwellenschnecken schmelzcompoundiert oder schmelzextrudiert.

Gegenstand der vorliegenden Erfindung ist somit auch ein Verfahren zur Herstellung der erfindungsgemäßen Formmassen enthaltend die Komponenten A), B), D), gegebenenfalls C) und gegebenenfalls mindestens einen Zusatz ausgewählt aus Stabilisatoren, Pigmenten, Entformungsmitteln, Fließhilfsmitteln, Füllstoffen, Verstärkungsstoffen, Flammschutzmitteln und/oder Antistatika, das dadurch gekennzeichnet ist, daß man die Komponenten A), B), D), gegebenenfalls C) und gegebenenfalls mindestens einen der genannten Zusätze in bekannter weise simultan oder sukzessive vermischt und bei erhöhten Temperaturen, vorzugsweise bei 200 °C bis 350 °C in üblichen Vorrichtungen, beispielswiese in Innenknetern, Extrudern oder Doppelwellenschnecken schmelzcompoundiert oder schmelzextrudiert.

Die erfindungsgemäßen Formmassen können zur Herstellung von Formkörpern jeder Art, z.B. durch Spritzgießen, verwendet werden. Beispiele für Formkörper sind: Gehäuseteile (z.B. für Haushaltsgeräte wie Saftpressen, Kaffeemaschinen, Mixer), Abdeckplatten für das Baugewerbe und Automobilteile. Sie werden außerdem für elektrische Geräte, z.B. für Steckerleisten eingesetzt, weil sie sehr gute elektrische Eigenschaften haben.

Formkörper können auch durch Tiefziehen aus vorher hergestellten Platten oder Folien hergestellt werden. Ein weiterer Gegenstand der Erfindung ist also die Verwendung der beschriebenen Formmassen zur Herstellung von Formkörpern.

Beispiele

1. Eingesetzte Komponenten

Angegebene Teile bedeuten Gewichtsteile.

**Komponente A**

Lineares Polycarbonat aus Basis Bisphenol A mit einer relativen Lösungsviskosität $\eta_{rel}$ = 1,26 bis 1,28, gemessen in Methylenchlorid bei 25 °C und in einer Konzentration von 0,5 g/100 ml.

**Komponente B**

SAN-Pfropfpolymerisat von 45 Gew.-% Styrol-Acrylnitril-Gemisch (im Gew.-Verhältnis von 72:28) auf 55 Gew.-% teilchenförmiges Polybutadien einer mittleren Teilchengröße ($d_{50}$) von 0,4 µm, erhalten durch Emulsionspolymerisation.

**Komponente C**

Styrol/Acrylnitril-Copolymerisat mit einem Styrol/Acrylnitril-Gewichts-Verhältnis von 72:28 und einer Grenzviskosität von ($\eta$) = 0,55 dl/g (Messung in Dimethylformamid bei 20 °C).

**Komponente D**

Lineares Poly-[p-phenylensulfid] mit einer Schmelzviskosität von 44 Pa.s, gemessen bei 306 °C (1000

$Ds^{-1}$).

2. Herstellung und Prüfung der erfindungsgemäßen Formmassen

Die Komponenten A, B und D und gegebenenfalls C wurden auf einem Doppelwellenextruder (ZSK 53 der Fa. Werner & Pfleiderer) bei einer Temperatur von 280 °C aufgeschmolzen und homogenisiert.

Von den Formmassen wurden auf einer Spritzgußmaschine Stäbe der Abmessung 80 x 10 x 4 $mm^3$ (Verarbeitungstemperatur 280 °C) hergestellt, an denen die Kerbschlagzähigkeit bei Raumtemperaturen und - 20 °C (Methode ISO 180 1A) und die Wärmeformbeständigkeit nach Vicat VST B 120 (DIN 53 460) gemessen wurde. Kerbschlagzähigkeit und Wärmeformbeständigkeit der Formmassen der Beispiele 1 (Vergleichsbeispiel: 2), 3 und 5 (Vergleichsbeispiel: 4) werden durch die erfindungsgemäße Maßnahme nicht oder nur unwesentlich beeinträchtigt.

Außerdem wurden bei 290 °C Musterplättchen der Abmessung 60 x 40 x 2 $mm^3$ hergestellt und der Rohton visuell beurteilt. Alle erfindungsgemäßen Beispiele weisen einen deutlich helleren Rohton als die Vergleichsbeispiele auf.

Zur vergleichenden Beurteilung der Themostabilität wurden von den Einstellungen der Beispiele 3 bis 5 Musterplättchen der o.g. Abmessung bei steigenden Temperaturen (beginnend bei 270 °C in Schritten von 10 °C bis zum Auftreten deutlicher Oberflächenstörungen) abgespritzt. Dabei zeigte sich, daß die Formmassen der erfindungsgemäßen Beispiele 3 und 5 eine um 10 °C höhere Thermostabilität als die des Vergleichsbeispiels 4 besitzen, d.h. bei den Beispielen 3 und 5 kommt es erst bei Abspritztemperaturen von 300 °C und darüber zu Oberflächenstörungen (Schlieren), während diese beim Vergleichsbeispiel 4 bereits ab 290 °C auftreten.

Zusammensetzung und technologische Eigenschaften der Formmassen finden sich in nachstehender Tabelle.

Zusammensetzung und Eigenschaften der Formmassen

| Beispiel | Komponenten [Gew.-Teile] A | B | C | D | Kerbschlagzähigkeit ISO 180 1A [kJ/m²] R.T. | -20° C | Vicat VST B 120 DIN 53 460 [° C] | Rohton |
|---|---|---|---|---|---|---|---|---|
| 1 | 70 | 20 | | 10 | 50 | 43 | 147 | weiß |
| 2 1) | 77,8 | 22,2 | | | 52 | 45 | 148 | gelb |
| 3 | 60 | 20 | 20 | 5 | 64 | 18 | 123 | weiß |
| 4 1) | 60 | 20 | 20 | | 44 | 37 | 123 | hellgelb |
| 5 | 60 | 20 | 20 | 1 | 50 | 37 | 124 | weiß |

1) Vergleichsbeispiel

## Patentansprüche

1. Thermoplastische Formmassen, enthaltend
   A. 10 bis 95 Gew.-Teile eines aromatischen Polycarbonats und/oder eines aromatischen Polyestercarbonats und/oder eines aromatischen Polyesters

B. 5 bis 70 Gew.-Teile eines Pfropfpolymerisats von

B.1 5 bis 95 Gew.-Teilen einer Pfropfauflage aus Vinylmonomerpolymerisat, wobei die Pfropfauflage erhalten wurde durch Pfropfpolymerisation einer Monomermischung aus

B.1.1 50 bis 99 Gew.-Teilen Styrol, α-Methylstyrol, kernsubstituiertem Styrol, Methylmethacrylat oder Mischungen daraus, und

B.1.2 1 bis 50 Gew.-Teilen (Meth-)Acrylnitril, Methylmethacrylat, n-Butylacrylat, t-Butyl(meth)-acrylat, Maleinsäureanhydrid, N-Alkyl- oder N-Aryl-substituiertem Maleinimid oder Mischungen daraus,

auf

B.2 5 bis 95 Gew.-Teile einer vernetzten, teilchenförmigen elastomeren Pfropfgrundlage mit einem durchschnittlichen Teilchendurchmesser ($d_{50}$-Wert) von 0,05 bis 5 µm und einer Glasübergangstemperatur < 10 °C

C. 0 bis 50 Gew.-Teile eines thermoplastischen Harzes, das

C.1 ein Vinylcopolymerisat oder

C.2 ein Polyalkylenterephthalat ist,

dadurch gekennzeichnet, daß die Formmassen, bezogen auf 100 Gew.-Teile aus A und B und gegebenenfalls C

D. 0,1 bis 40 Gew.-Teile eines Polyarylensulfids enthalten.

**2.** Thermoplastische Formmassen gemäß Anspruch 1, dadurch gekennzeichnet, daß sie 0,5 bis 20 Gew.-Teile der Komponente D enthalten.

**3.** Thermoplastische Formmassen gemäß Anspruch 1, dadurch gekennzeichnet, daß sie 1 bis 10 Gew.-Teile der Komponente D enthalten.

**4.** Thermoplastische Formmassen gemäß Ansprüchen 1 bis 3, dadurch gekennzeichnet, daß die Komponente C.1 ein Vinylcopolymerisat aus

C.1.1 50 bis 99 Gew.-Teilen Styrol, α-Methylstyrol, kernsubstituiertem Styrol, Methylmethacrylat oder Mischungen daraus, und

C.1.2 1 bis 50 Gew.-Teilen (Meth-)Acrylnitril, Methylmethacrylat, n-Butylacrylat, t-Butyl(meth)acrylat, Maleinsäureanhydrid, N-Alkyl- oder N-Aryl-substituiertem Maleinimid oder Mischungen daraus ist.

**5.** Thermoplastische Formmassen gemäß Ansprüchen 1 bis 4, dadurch gekennzeichnet, daß sie mindestens einen Zusatz ausgewählt aus der Gruppe der Stabilisatoren, Pigmente, Entformungsmittel, Fließhilfsmittel, Füll- und Verstärkungsstoffe, Flammschutzmittel und Antistatika enthalten.

**6.** Verfahren zur Herstellung der Formmassen der Ansprüche 1 bis 5, dadurch gekennzeichnet, daß man die Komponenten A), B), D), gegebenenfalls C) und gegebenenfalls mindestens einen Zusatz ausgewählt aus Stabilisatoren, Pigmenten, Entformungsmitteln, Fließhilfsmitteln, Füllstoffen, Verstärkungsstoffen, Flammschutzmitteln und Antistatika in bekannter Weise simultan oder sukzessive vermischt und bei erhöhten Temperaturen in üblichen Vorrichtungen schmelzcompoundiert oder schmelzextrudiert.

**7.** Verwendung der Formmassen der Ansprüche 1 bis 5 zur Herstellung von Formkörpern.